# FASCICULE DE BREVET EUROPEEN

(11) **EP 3 129 200 B1**
(45) Date de publication et mention de la délivrance du brevet: **28.02.2018**
(21) Numéro de dépôt: 15718542.2
(22) Date de dépôt: 02.04.2015
(51) Int. Cl.: B28B 1/00, C04B 35/565, C04B 35/628, C04B 35/80, C04B 38/00

(54) **PROCÉDÉ DE FABRICATION D'UNE PIÈCE EN MATÉRIAU COMPOSITE MULTIPERFORÉE**
VERFAHREN ZUR HERSTELLUNG EINES MEHRFACH PERFORIERTEN VERBUNDTEILS
PROCESS FOR MANUFACTURING A MULTIPERFORATED COMPOSITE PART

(30) Priorité: 11.04.2014 FR 1453250
(43) Date de publication de la demande: 15.02.2017
(73) Titulaire: Safran Ceramics, 33185 Le Haillan (FR)
(72) Inventeur: DUCHARLET, Pascal, 33160 Saint-Médard-en-Jalles (FR); MARTIN, Xavier, 64800 Beuste (FR); LABORDE, Jocelin, 64230 Sauvagnon (FR)
(74) Mandataire: Desormiere, Pierre-Louis
(86) Numéro de dépôt international: PCT/FR2015/050859
(87) Numéro de publication internationale: WO 2015/155445

(56) Documents cités:
- WO-A1-02/18075
- FR-A1- 2 852 003
- FR-A1- 2 852 004
- FR-A1- 2 939 129
- FR-A1- 2 989 390

## Description

### Arrière-plan de l'invention

La présente invention concerne la fabrication de pièces en matériau composite multiperforées, c'est-à-dire des pièces formées d'un renfort fibreux densifié par une matrice et dans laquelle une pluralité de perforations a été réalisée.

Les pièces en matériau composite multiperforées trouvent des applications particulières notamment dans les domaines du filtrage et de l'acoustique. Dans le cas de pièces en matériau composite ayant des fonctions acoustiques, il est courant de réaliser dans ces dernières des perforations comme c'est le cas par exemple des peaux de panneaux d'atténuation acoustique présents dans les moteurs aéronautiques. Afin de permettre la pénétration puis l'atténuation des ondes sonores à l'intérieur de tels panneaux, les peaux de ces derniers doivent présenter une pluralité de perforations.

Dans le cas de pièces en matériau composite à matrice céramique (CMC), celles-ci peuvent élaborées en imprégnant une texture fibreuse, destinée à former le renfort de la pièce, avec une résine précurseur de céramique, en polymérisant la résine et en procédant à une pyrolyse de la texture imprégnée afin de former une matrice céramique dans celle-ci.

Les perforations dans une pièce en matériau composite CMC peuvent être réalisées de différentes façons. Elles peuvent être notamment réalisées par perçage au foret de la texture imprégnée au stade polymérisé. Toutefois, l'usinage doit être réalisé sans lubrification pour ne pas dégrader les matériaux présents dans la texture imprégné (incompatibilité chimique). Cela entraîne une usure prématurée du foret. En outre, la découpe n'est pas parfaite et laisse apparaître des fibrilles au niveau des perforations qui posent des problèmes dans la suite de la fabrication de la pièce.

Les perforations peuvent être également réalisées par perçage au laser de la texture imprégnée au stade polymérisé. Dans ce cas, la découpe de la texture est propre (absence de fibrilles) mais entraîne l'apparition de zone affectées thermiquement (ZAT) dans la texture.

Une autre solution consiste à placer la texture imprégnée de la résine sur une planche comportant des picots en surface et de procéder ensuite à la polymérisation de la résine. Cependant, un tel outillage est très coûteux et son utilisation est parfois délicate.

Les pièces en matériau composite concernées par la présente invention peuvent être également réalisées en matériau composite CMC de type oxyde/oxyde, c'est-à-dire en déposant au sein d'une texture fibreuse formée de fibres en oxyde des particules d'oxyde réfractaire qui sont ensuite frittées de manière à former une matrice en oxyde réfractaire dans la texture.

Les inconvénients des techniques de réalisation des perforations indiquées ci-avant se retrouvent également dans le cas de la réalisation de perforation dans une texture fibreuse contenant des particules d'oxyde réfractaires.

Par conséquent, il existe un besoin d'une solution permettant de réaliser des perforations multiples dans une pièce en matériau composite, et ce en assurant le respect de la géométrie définie pour les perforations (absence de fibrilles) et un coût de production le plus faible possible.

Les demandes de brevet FR 2852003 A1, FR 2852004 A1, FR 2989390 A1, WO 02/18075 A1 et FR 2939129 A1 divulguent des procédés de fabrication de matériaux composites fibreuses.

### Objet et résumé de l'invention

A cet effet, la présente invention propose un procédé de fabrication d'une pièce en matériau composite multiperforée comprenant les étapes suivantes :
- positionnement d'un masque de sablage sur une préforme comprenant une texture fibreuse imprégnée avec une résine précurseur de céramique polymérisée, ledit masque comportant une pluralité d'ouvertures correspondant aux perforations à réaliser dans la préforme,
- projection de particules abrasives à grande vitesse (sablage) sur la surface du masque de manière à perforer la préforme exposée dans les ouvertures dudit masque,
- pyrolyse de la préforme multiperforée de manière à former une matrice céramique dans la texture fibreuse multiperforée.

Ainsi, l'utilisation de la technique de sablage permet de réaliser de façon précise et économique des pièces en matériau composite multiperforée. Toutefois, conformément à l'invention, les perforations sont réalisées à un stade intermédiaire de la fabrication de la pièce, c'est-à-dire après polymérisation et avant transformation de la résine en céramique par pyrolyse. En effet, après pyrolyse, le matériau composite de la pièce présente une grande dureté, ce qui nécessite des durées et/ou des forces de sablage importantes. Dans ce cas, les risques de détérioration du masque de sablage sont élevés, ce qui ne permet plus d'assurer le respect de la géométrie définie pour les perforations.

L'invention concerne également un procédé de fabrication d'une pièce en matériau composite multiperforée comprenant les étapes suivantes :
- positionnement d'un masque de sablage sur une préforme comprenant une texture fibreuse contenant des particules d'oxyde réfractaire, ledit masque comportant une pluralité d'ouvertures correspondant aux perforations à réaliser dans la préforme,
- projection de particules abrasives à grande vitesse (sablage) sur la surface du masque de manière à perforer la préforme exposée dans les ouvertures dudit masque,
- frittage des particules d'oxyde réfractaire de manière à former une matrice en oxyde réfractaire dans la préforme multiperforée.

De même que précédemment, les perforations sont ici réalisées à un stade intermédiaire de la fabrication de la pièce en matériau composite, à savoir avant le frittage des particules d'oxyde lorsque la pièce présente encore un niveau de dureté compatible avec une durée et/ou force de sablage permettant de préserver l'intégrité du masque de sablage.

Selon un aspect particulier des procédés de l'invention, ceux-ci comprennent, après l'étape de pyrolyse ou de frittage, une étape de densification de la texture fibreuse multiperforée réalisée par infiltration chimique en phase gazeuse de carbure de silicium. Cette étape permet, en outre de finaliser la densification de la pièce, de former un revêtement de carbure de silicium qui protège le matériau de la pièce mis à nu dans les perforations.

Selon une caractéristique de l'invention, les particules abrasives sont projetées sur la surface du masque de sablage avec un angle compris entre 45° et 60°. Cela permet d'augmenter le rendement du sablage et de réduire sa durée.

### Brève description des dessins

D'autres caractéristiques et avantages de l'invention ressortiront de la description suivante de modes particuliers de réalisation de l'invention, donnés à titre d'exemples non limitatifs, en référence aux dessins annexés, sur lesquels:
- la figure 1 est une vue schématique en perspective d'une structure fibreuse utilisée pour réaliser une pièce multiperforée conformément à un mode de réalisation de l'invention;
- la figure 2 est une vue schématique en perspective d'une préforme obtenue à partir de la structure fibreuse de la figure 1,
- la figure 3 est une vue schématique en perspective montrant le positionnement d'un masque de sablage sur la préforme de la figure 2,
- la figure 4 est une vue schématique en coupe d'une machine de sablage utilisée pour réaliser des perforations dans la préforme de la figure 2,
- la figure 5 est une vue en perspective d'une pièce en matériau composite à matrice céramique multiperforée conformément à un mode de réalisation de l'invention.

### Description détaillée d'un mode de réalisation

Le procédé de l'invention concerne la fabrication de pièces en matériau composite à matrice céramique (CMC), c'est-à-dire des pièces formées d'un renfort en fibres réfractaires (carbone ou céramique) densifié par une matrice au moins partiellement céramique. Des exemples de matériaux CMC sont les composites C/SiC (renfort en fibres de carbone et matrice en carbure de silicium), les composites C/C-SiC (renfort en fibres de carbone et matrice comprenant une phase carbone, généralement au plus près des fibres, et une phase carbure de silicium), les composites SiC/SiC (fibres de renfort et matrice en carbure de silicium) et les composites oxyde/oxyde (fibres de renfort et matrice en alumine). Une couche d'interphase peut être interposée entre les fibres de renfort et la matrice pour améliorer la tenue mécanique du matériau.

Conformément à la présente invention, la réalisation des perforations par sablage est réalisée à un stade intermédiaire de la fabrication d'une pièce en matériau composite CMC. Plus précisément, lorsque la matrice du matériau CMC de la pièce est formée au moins partiellement à partir d'une résine précurseur de céramique, l'opération de sablage est réalisée au stade polymérisé de la résine, c'est-à-dire avant sa pyrolyse permettant de transformer le précurseur en céramique. Lorsque la matrice est formée à partir de particules d'oxyde réfractaire, comme c'est le cas pour un matériau composite CMC de type oxyde/oxyde, le sablage est réalisé avant le frittage des particules permettant de former une matrice en oxyde réfractaire.

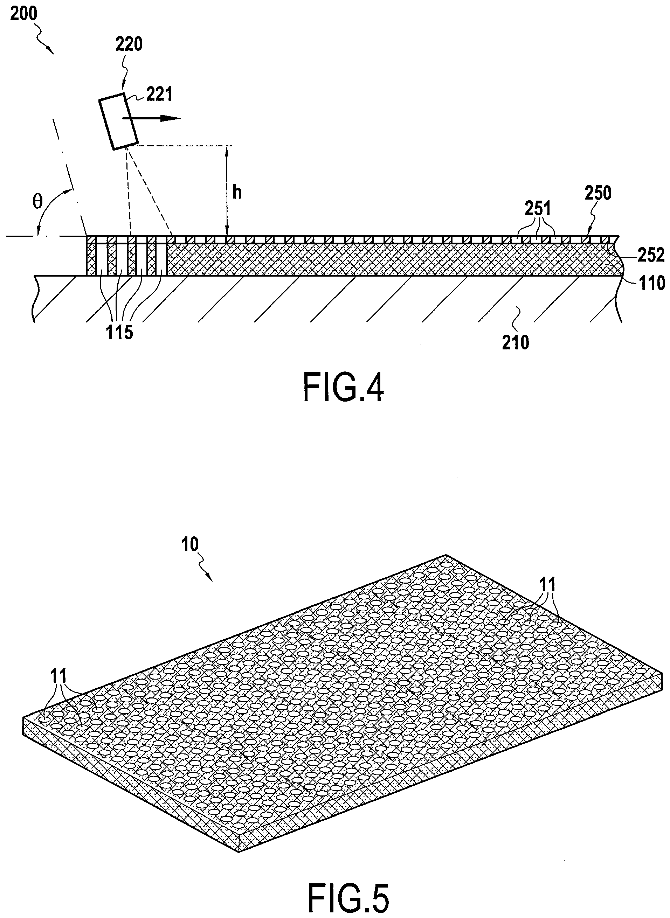

La figure 5 représente un peau acoustique 10 en matériau composite CMC qui comporte une multitudes de perforations 11. La peau acoustique 10 est par exemple destinée à être assemblé avec une structure alvéolaire afin de former un panneau d'atténuation acoustique.

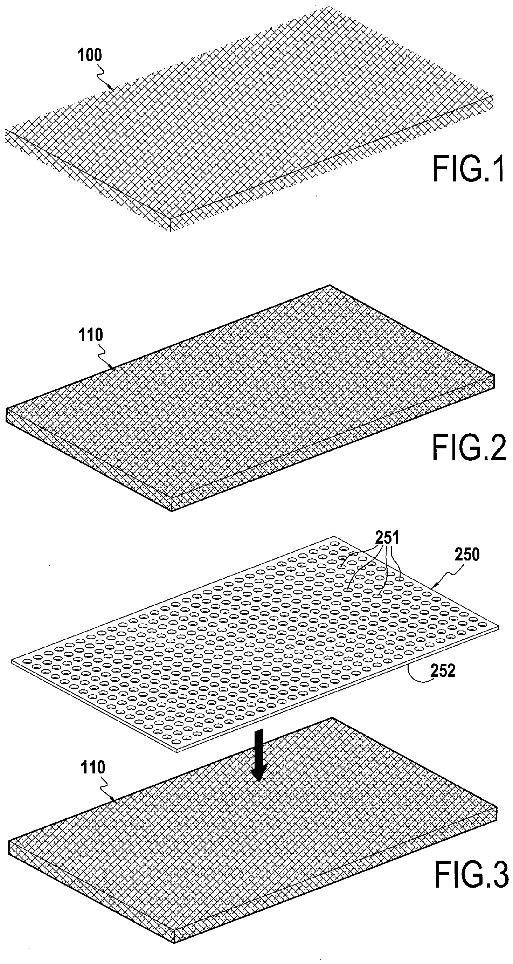

La fabrication de la peau acoustique débute par la réalisation d'une texture fibreuse 100 en fibres réfractaires, par exemple en fibres de carbone, céramique ou oxyde, représentée sur la figure 1.

La texture fibreuse utilisée peut être de diverses natures et formes telles que notamment:
- tissu bidimensionnel (2D),
- tissu tridimensionnel (3D) obtenu par tissage 3D ou multicouches tel que notamment décrit dans le document WO 2010/061140,
- tresse,
- tricot,
- feutre,
- nappe unidirectionnelle (UD) de fils ou câbles ou nappes multidirectionnelle (nD) obtenue par superposition de plusieurs nappes UD dans des directions différentes et liaison des nappes UD entre elles par exemple par couture, par agent de liaison chimique ou par aiguilletage.

On peut aussi utiliser une structure fibreuse formée de plusieurs couches superposées de tissu, tresse, tricot, feutre, nappes, câbles ou autres, lesquelles couches sont liées entre elles par exemple par couture, par implantation de fils ou d'éléments rigides ou par aiguilletage.

Dans le cas de la formation d'une matrice céramique à partir d'un précurseur liquide de celle-ci, la texture fibreuse est immergée dans un bain contenant une résine et habituellement un solvant de celle-ci. D'autres techniques connues d'imprégnation peuvent être utilisées, telles que passage de la texture fibreuse dans une imprégnatrice en continu, imprégnation par infusion, ou encore imprégnation par RTM ("Resin Transfer Moulding").

Le précurseur organique se présente habituellement sous forme d'un polymère, tel qu'une résine, éventuellement dilué dans un solvant. A titre d'exemple, des précurseurs liquides de céramique, notamment de SiC, peuvent être des résines de type polycarbosilane (PCS), polysiloxane (PSX), polytitanocarbosilane (PTCS), ou polysilazane (PSZ).

Après imprégnation de la texture fibreuse et éventuellement égouttage de celle-ci, on procède à la polymérisation de la résine qui permet de réaliser une consolidation de la texture fibreuse.

Dans le cas de la formation d'une matrice de type oxyde, des particules d'oxyde réfractaire sont déposées dans la structure fibreuse. Une des techniques connue d'un tel dépôt consiste à :
- placer d'un côté de la texture une barbotine contenant une poudre submicronique de particules d'oxyde réfractaire,
- établir une différence de pression pour forcer la barbotine à traverser la préforme,
- filtrer le liquide ayant traversé la préforme pour retenir la poudre de particules d'oxyde réfractaire à l'intérieur de la préforme.

Conformément à l'invention, c'est à ce stade intermédiaire de la fabrication de la pièce, c'est-à-dire au stade d'une préforme 110 correspondant à la texture 100 après polymérisation de la résine ou après dépôt des particules d'oxyde réfractaire dans celle-ci (figure 2), que les perforations vont être réalisées.

Conformément à l'invention, les perforations sont réalisées par sablage, c'est-à-dire par projection à grande vitesse de particules abrasives sur la préforme 110.

Avant l'opération de sablage, un masque de sablage ou pochoir 250 est positionné sur la surface de la préforme 100 comme illustrée sur la figure 3. Le masque de sablage 250 comporte une pluralité d'ouvertures 251 correspondant au perforations à réaliser dans la préforme 110. Le masque 250 est réalisé en un matériau souple afin de résister aux particules abrasives projetées et s'adapter à toutes les géométries de préformes et en particulier à des préformes présentant des formes courbées. Le masque 250 peut être par exemple réalisé à partir d'un élastomère comportant sur sa surface 252 destinée à être en contact avec la préforme un adhésif permettant d'assurer son maintien en position.

Comme illustrée sur la figure 4, la préforme 110 recouverte du masque 250 est placée sur le support 210 d'une machine de sablage 200 comprenant en outre une tête de sablage 220 comportant une buse 221 à partir de laquelle sont projetée des particules abrasives à grande vitesse de manière à former des perforations 115 dans la préforme 110. La tête de sablage 220 est ajustable en hauteur afin de régler la distance h entre la buse 221 et la surface de la préforme à sabler (à épaisseur du masque de sablage près). La tête de sablage est également orientable afin de régler l'angle θ suivant lequel les particules sont projetées sur la texture.

Des particules abrasives pouvant être utilisées pour la perforation d'une préforme correspondant à une texture fibreuse imprégnée d'une résine précurseur de céramique polymérisé sont par exemples des grains de carbure de silicium présentant une forme angulaire à arêtes vives et ayant une granulométrie voisine de 100 µm. Pour la perforation d'une préforme correspondant à une texture fibreuse contenant des particules d'oxyde réfractaire, des particules abrasives telles que des grains de corindon blanc (oxyde d'alumine anhydre cristallisée pure à 99,6%) ou de carbure de silicium à structure angulaire à arêtes vives et ayant une granulométrie voisine de 100 µm peuvent être utilisées.

La distance de projection, c'est-à-dire la distance entre la sortie de la buse et la préforme à sabler est réglée en fonction de la pression avec laquelle les particules sont projetées en sortie de la buse. Plus précisément, pour une pression de sortie de buse déterminée, on règle la distance de projection de manière à optimiser la vitesse de perforation tout en veillant à ne pas attaquer le masque. A titre d'exemple, avec une buse projetant des particules abrasives à une pression de 7 bars, la distance de projection peut être comprise entre 90 mm 150 mm. La distance de projection correspond à la hauteur h lorsque l'angle de projection θ est de 90°. La distance de projection est supérieure à la hauteur h lorsque l'angle de projection θ est inférieur à 90°.

Concernant l'angle de projection θ, c'est-à-dire l'angle sous lequel les particules abrasives vont impacter la préforme, même si un angle de projection de 90° peut être utilisé, il a été constaté que la réalisation des perforations est plus efficace et économique avec un angle de projection compris entre 45° et 60°. En effet, une projection à 90° présente certes une intensité d'impact plus importante mais un rendement moindre en raison des ricochés importants des particules après impact qui forment un écran et provoquent la destruction par collision des particules incidentes.

Une fois toutes les perforations réalisées, le masque de sablage est retirée et on obtient la peau acoustique 10 de la figure 5, correspondant à une pièce multiperforée en matériau composite CMC, à savoir une pièce formé d'un renfort en fibres réfractaires densifié par une matrice au moins partiellement céramique (carbure de silicium, oxyde, etc.).

Après l'opération de sablage, la pièce peut être soumise à une infiltration chimique en phase gazeuse (CVI) de carbure de silicium qui permet, en outre de finaliser la densification de la préforme, de former un revêtement (« sealcoat ») de carbure de silicium qui protège les parties de la pièce mises à nues dans les perforations. De façon connue, la pièce est placée dans un four dans lequel est admise une phase gazeuse réactionnelle. La pression et la température régnant dans le four et la composition de la phase gazeuse sont choisies de manière à permettre la diffusion de la phase gazeuse au sein de la porosité résiduelle puis à la surface des pièces pour y former une matrice par dépôt d'un matériau solide résultant d'une décomposition d'un constituant de la phase gazeuse ou d'une réaction entre plusieurs constituants. A titre d'exemple, des précurseurs gazeux de céramique, notamment de SiC, peut-être du méthyltrichlorosilane (MTS) donnant du SiC par décomposition du MTS (éventuellement en présence d'hydrogène).

## Revendications

1. Procédé de fabrication d'une pièce en matériau composite multiperforée (10) comprenant les étapes suivantes :
- positionnement d'un masque de sablage (250) sur une préforme (110) comprenant une texture fibreuse (100) imprégnée avec une résine précurseur de céramique polymérisée, ledit masque comportant une pluralité d'ouvertures (251) correspondant aux perforations à réaliser dans la préforme (110),
- projection de particules abrasives à grande vitesse sur la surface du masque (250) de manière à perforer la préforme (110) exposée dans les ouvertures dudit masque,
- pyrolyse de la préforme multiperforée de manière à former une matrice céramique dans la texture fibreuse multiperforée.

2. Procédé selon la revendication 1, **caractérisé en ce qu'**il comprend après l'étape de traitement thermique une étape de densification de la préforme multiperforée (110) réalisée par infiltration chimique en phase gazeuse de carbure de silicium.

3. Procédé selon la revendication 1 ou 2, **caractérisé en ce que** les particules abrasives sont des grains de carbure de silicium présentant une forme angulaire à arêtes vives.

4. Procédé selon l'une quelconque des revendications 1 à 3, **caractérisé en ce que** les particules abrasives sont projetées sur la surface du masque de sablage avec un angle compris entre 45° et 60°.

5. Procédé de fabrication d'une pièce en matériau composite multiperforée (10) comprenant les étapes suivantes :
- placement d'un masque de sablage (250) sur une préforme (110) comprenant une texture fibreuse (100) contenant des particules d'oxyde réfractaire, ledit masque comportant une pluralité d'ouvertures (251) correspondant aux perforations à réaliser dans la préforme (110),
- projection de particules abrasives à grande vitesse sur la surface du masque (250) de manière à perforer la préforme (110) exposée dans les ouvertures dudit masque,
- frittage des particules d'oxyde réfractaire de manière à former une matrice en oxyde réfractaire dans la préforme multiperforée.

6. Procédé selon la revendication 5, **caractérisé en ce qu'**il comprend après l'étape de traitement thermique une étape de densification de la préforme multiperforée (110) réalisée par infiltration chimique en phase gazeuse de carbure de silicium.

7. Procédé selon la revendication 5 ou 6, **caractérisé en ce que** les particules abrasives sont des grains de corindon blanc ou de carbure de silicium présentant une forme angulaire à arêtes vives.

8. Procédé selon l'une quelconque des revendications 5 à 7, **caractérisé en ce que** les particules abrasives sont projetées sur la surface du masque de sablage avec un angle compris entre 45° et 60°.

## Patentansprüche

1. Verfahren zur Herstellung eines mehrfach perforierten Verbundwerkstoffteils (10), umfassend die folgenden Schritte:
- Positionieren einer Sandstrahlschablone (250) auf einer Vorform (110), die eine faserige Textur (100) umfasst, die mit einem polymerisierten keramischen Vorläuferharz imprägniert ist, wobei die Schablone mehrere Öffnungen (251) aufweist, die den in der Vorform (110) herzustellenden Perforationen entsprechen,
- Spritzen von Schleifpartikeln mit hoher Geschwindigkeit auf die Oberfläche der Schablone (250), so dass die in den Öffnungen der Schablone freiliegende Vorform (110) perforiert wird,
- Pyrolysieren der mehrfach perforierten Vorform zur Bildung einer keramischen Matrix in der mehrfach perforierten faserigen Textur.

2. Verfahren nach Anspruch 1, **dadurch gekennzeichnet, dass** es nach dem Schritt der Wärmebehandlung einen Schritt des Verdichtens der mehrfach perforierten Vorform (110) durch chemische Infiltration von Siliziumkarbid in der Gasphase umfasst.

3. Verfahren nach Anspruch 1 oder 2, **dadurch gekennzeichnet, dass** die Schleifpartikel Siliziumkarbid-Körner mit einer eckigen Form und scharfen Kanten sind.

4. Verfahren nach einem der Ansprüche 1 bis 3, **dadurch gekennzeichnet, dass** die Schleifpartikel in einem Winkel zwischen 45° und 60° auf die Oberfläche der Sandstrahlschablone gespritzt werden.

5. Verfahren zur Herstellung eines mehrfach perforierten Verbundwerkstoffteils (10), umfassend die folgenden Schritte:
- Positionieren einer Sandstrahlschablone (250) auf einer Vorform (110), die eine faserige Textur (100) umfasst, die feuerfeste Oxidpartikel enthält, wobei die Schablone mehrere Öffnungen (251) aufweist, die den in der Vorform (110) herzustellenden Perforationen entsprechen,
- Spritzen von Schleifpartikeln mit hoher Geschwindigkeit auf die Oberfläche der Schablone (250), so dass die in den Öffnungen der Schablone freiliegende Vorform (110) perforiert wird,
- Sintern der feuerfesten Oxidpartikel, sodass eine feuerfeste Oxidmatrix in der mehrfach perforierten Vorform gebildet wird.

6. Verfahren nach Anspruch 5, **dadurch gekennzeichnet, dass** es nach dem Schritt der Wärmebehandlung einen Schritt des Verdichtens der mehrfach perforierten Vorform (110) durch chemische Infiltration von Siliziumkarbid in der Gasphase umfasst.

7. Verfahren nach Anspruch 5 oder 6, **dadurch gekennzeichnet, dass** die Schleifpartikel Körner aus weißem Korund oder Siliziumkarbid mit einer eckigen Form und scharfen Kanten sind.

8. Verfahren nach einem der Ansprüche 5 bis 7, **dadurch gekennzeichnet, dass** die Schleifpartikel in einem Winkel zwischen 45° und 60° auf die Oberfläche der Sandstrahlschablone gespritzt werden.

## Claims

1. A method of fabricating a multi-perforated part (10) out of composite material, the method comprising the following steps:
• positioning a sand-blasting mask (250) on a preform (110) comprising a fiber texture (100) impregnated with a polymerized ceramic-precursor resin, said mask having a plurality of openings (251) corresponding to the perforations to be made in the preform (110);
• projecting abrasive particles at high speed against the surface of the mask (250) so as to perforate the preform (110) exposed in said openings of said mask; and
• pyrolyzing the multi-perforated preform so as to form a ceramic matrix in the multi-perforated fiber texture.

2. A method according to claim 1, **characterized in that** after the heat treatment step it includes a step of densifying the multi-perforated preform (110), performed by chemical vapor infiltration of silicon carbide.

3. A method according to claim 1 or claim 2, **characterized in that** the abrasive particles are grains of silicon carbide of angular shape with sharp edges.

4. A method according to any one of claims 1 to 3, **characterized in that** the abrasive particles are projected against the surface of the sand-blasting mask at an angle lying in the range 45° to 60°.

5. A method of fabricating a multi-perforated part (10) out of composite material, the method comprising the following steps:
• placing a sand-blasting mask (250) on a preform (110) comprising a fiber texture (100) containing refractory oxide particles, said mask including a plurality of openings (251) corresponding to the perforations to be made in the preform (110);
• projecting abrasive particles at high speed against the surface of the mask (250) so as to perforate the preform (110) exposed in the openings of said mask; and
• sintering the refractory oxide particles so as to form a refractory oxide matrix in the multi-perforated preform.

6. A method according to claim 5, **characterized in that** after the heat treatment step it includes a step of densifying the multi-perforated preform (110), performed by chemical vapor infiltration of silicon carbide.

7. A method according to claim 5 or claim 6, **characterized in that** the abrasive particles are grains of white corundum or of silicon carbide of angular shape with sharp edges.

8. A method according to any one of claims 5 to 7, **characterized in that** the abrasive particles are projected against the surface of the sand-blasting mask at an angle lying in the range 45° to 60°.
